Europäisches Patentamt

European Patent Office

Office européen des brevets

(19)

(11) **EP 1 390 429 B1**

(12) **EUROPÄISCHE PATENTSCHRIFT**

(45) Veröffentlichungstag und Bekanntmachung des Hinweises auf die Patenterteilung:
**02.11.2005 Patentblatt 2005/44**

(51) Int Cl.[7]: **C08J 11/06**, C08J 11/04, G01J 3/52, G01J 3/46, G01N 33/44

(21) Anmeldenummer: **02771652.1**

(22) Anmeldetag: **18.05.2002**

(86) Internationale Anmeldenummer:
**PCT/EP2002/005511**

(87) Internationale Veröffentlichungsnummer:
**WO 2002/094918 (28.11.2002 Gazette 2002/48)**

(54) **VERFAHREN ZUR EINFÄRBUNG VON KUNSTSTOFF MIT KUNSTSTOFFRECYCLING MATERIAL**

METHOD FOR COLORING PLASTIC BY USING PLASTIC RECYCLING MATERIAL

PROCEDE DE COLORATION DE MATIERE PLASTIQUE AVEC DE LA MATIERE PLASTIQUE DE RECYCLAGE

(84) Benannte Vertragsstaaten:
**AT BE CH CY DE DK ES FI FR GB GR IE IT LI LU MC NL PT SE TR**

(30) Priorität: **23.05.2001 DE 10125084**

(43) Veröffentlichungstag der Anmeldung:
**25.02.2004 Patentblatt 2004/09**

(73) Patentinhaber: **GRUNDIG Aktiengesellschaft 90471 Nürnberg (DE)**

(72) Erfinder:
• **SCHULTHEISS, Klaus 90762 Fürth (DE)**
• **SCHWARZ, Gerhard 90765 Fürth (DE)**

(56) Entgegenhaltungen:
**EP-A- 1 052 021        US-A- 3 368 864 US-A- 6 064 487**

## Beschreibung

Aufgabe der Erfindung ist es, ein Verfahren anzugeben um Formteile aus Kunststoff in großen Mengen einzufärben, unter Verwendung von Kunststoffrecyclingmaterial.

Kunststoffe liegen vor ihrer Verarbeitung als zumeist farbneutrales Grundmaterial vor. Um Formteile aus Kunststoff in der Masse einzufärben, werden daher sogenannte Masterbatches verwendet. Bei diesen Masterbatches handelt es sich um Stoffe, welche dem Kunststoffrohmaterial beigemengt werden und diesen einfärben. Diese Masterbatches haben den Nachteil, dass sie sehr teuer sind.

Gehäuse für im Hause verwendeten Elektronikgeräte, wie z.B. Fernseher sind designbedingt durch freie Formen gekennzeichnet, die sich mit Kunststoff am einfachsten realisieren lassen. Als kostengünstiges Produktionsverfahren kommt hierbei das Spritzgussverfahren zum Einsatz.

Aus WO 98/01498 ist ein Verfahren zur Herstellung von Masterbatches bekannt.

Aus EP 0 352 804 A2 ist ein farbiges Polymer bekannt, welches mit Farbstoff eine Verbindung eingeht.

Aus EP 0 290 092 ist ein Verfahren zur Einfärbung von Kunststoffgranulat bekannt.

Aus DE 198 07 261 A1 ist ein Verfahren zur Herstellung von eingefärbtem Kunststoffpulver bekannt.

Aus DE 43 31 167 A1 ist ein Verfahren zur Herstellung eines Farbkonzentrates für die Verarbeitung in Kunststoffverarbeitungsmaschinen bekannt.

Aus DE 40 26 188 A1 ist ein Verfahren zur Wertstoffgewinnung von nichtflüchtigen, anorganischen Kunststoffadditiven bekannt. Hierbei werden geformte Gegenstände oder Abfallreste aus Kunststoff nach an sich bekannten Verfahren zerkleinert und verbrannt. Den erhaltenen Rückstand aus der Verbrennung wird dann aufbereitet und weiterverwendet.

Keines der bekannten Verfahren offenbart eine Verwendung von Recyclingmaterial aus Altgeräten zur Herstellung von neuen Geräten, insbesondere Gehäusen.

Ein besonderes Problem ist in diesem Zusammenhang das Recycling der Altgeräte. Hierzu ist es heutzutage üblich, Kunststoffteile der Altgeräte auszubauen, zu mahlen und der Neuware beizumischen und so diese Recyclingmaterialien der Produktion wieder zuzuführen. Nicht nur die Gehäuseformen, sondern auch die Farben dieser Gehäuse sind dem allgemeinen Modetrend unterworfen. Zu den bisherigen Grau- und Schwarztönen kommen zunehmend bunte Farben wie gelb, rot, blau etc. hinzu.

Die Herstellung bunt eingefärbter Gehäuse erschwert die Verwendung von Recyclingmaterial, da dessen Farbe großen Schwankungen unterworfen ist. Eine farbreine Sortierung des Recyclingmaterials wäre unwirtschaftlich, da hierbei jeder denkbare Farbton in lediglich kleinen Mengen anfallen würde.

Es besteht aber die Möglichkeit, farbiges Recyclingmaterial mit ungefärbter Neuware zu compoundieren und die Farbe des Compounds exakt zu bestimmen.

Um Kosten zu sparen soll ein Verfahren aufgezeigt werden, welches es ermöglicht farbiges Kunststoffrecyclingmaterial bei der Herstellung wiederzuverwerten.

Aus WO 00/67977 ist ein Verfahren zum Sortieren und Trennen von Kunststoffen offenbart. Es ist jedoch nicht offenbart die originären Recycling-Kunststoffe bei der Farbgestaltung der aus den originären Recycling-Kunststoffe herzustellenden Produkte zu berücksichtigen.

Aus DE-A1-41 26 694 ist es bekannt aus Kunststoffabfällen einen Gartenzaun herzustellen.

Aus JP-A-08099317 ist bekannt aus Altkunststoffflaschen neue Kunststoffflaschen herzustellen.

Aus DE-A1-41 29 754 ist bekannt aus kunststoffhaltigen Gemengen sortenreinen Kunststoff zu gewinnen.

EP-A-1 052 021 beschreibt die Herstellung von nach Farben getrennten Kunststoffrecyclaten und deren Compoundierung.

Diese Aufgabe wird durch die Merkmale des Anspruches 1 gelöst. Weitere vorteilhaften Ausgestaltungen der Erfindung sind in den abhängigen Ansprüchen und der weiteren Beschreibung angegeben.

Unter Farbrezeptierung wird allgemein die Bestimmung der Farbmittelkonzentration verstanden, die zur Nachstellung des Farbtons einer Vorlage notwendig ist. Zur Farbrezeptierung wird zunächst die Reflexionskurve der Vorlage exakt gemessen. Die Vorlage besteht aus einem Farbmittel, das in eine Matrix eingebettet ist. Mittels Messungen von Mustern, die das Farbmittel in der Matrix in unterschiedlichen Konzentrationen enthalten, werden Kalibrierreihen erstellt.

Auf der Basis dieser Kalibrierreihen lässt sich dann die Menge an Farbmittel berechnen, die zur Nachstellung eines gewünschten Farbtons erforderlich ist.

Bei der Produktion von farbigen Kunststoffteilen werden allgemein voreingefärbte Kunststoffe oder uneingefärbte Kunststoffe und ein Masterbatch verwendet. Das Masterbatch hat die Aufgabe, den Kunststoff einzufärben. Das Problem besteht darin, welche Menge an Masterbatch notwendig ist, um den erwünschten Farbeindruck zu erzielen. Diese Menge lässt sich mit Hilfe eines Farbmessgerätes, eines Farbrezeptierungsprogramms und der Kalibrierreihe für diese Farbe berechnen. Bei der Produktionskontrolle wird bestimmt, ob die eingesetzte Masterbatchmenge ausreichend ist, um den gewünschten Farbeindruck zu erzeugen.

Farbe, hierbei sind auch Schwarz-, Weiß und Grautöne als sogenannte unbunte Farben inbegriffen, werden nach DIN 5033 definiert:

"Farbe ist diejenige Gesichtsempfindung eines dem Auge strukturlos erscheinenden Teiles des Gesichtsfeldes, durch die sich dieser Teil bei einäugiger Beobachtung mit unbewegten Augen von einem gleichzeitig gesehenen, ebenfalls strukturlosen angrenzenden Teil allein unterscheiden kann". Der Zweck dieser Definition ist die Abgrenzung der Wahrnehmung von Farbe gegenüber anderen Gesichtsempfindungen wie z.B. einer Struktur- oder einer Raumwahrnehmung.

Um eine exakte Festlegung der Farbe zu ermöglichen, werden sogenannte Farbmaßzahlen verwendet. Zur Farbmaßzahl gelangt man über mathematische Rechenschritte. Hierzu ist die Messung der Reflexionskurve der Probe notwendig. Als erstes wird das in das Auge eintreffende Licht bestimmt. Dies ergibt sich aus der Strahlungsverteilung der Lichtart und dem in der Probe recherchierten Anteil. Dabei ist das, in das Auge einfallende Licht die Summe der Lichtmenge über das gesamte Spektrum des sichtbaren Lichtes gemäß der Formel:

$$M = \sum_{\lambda} S(\lambda) * R(\lambda)$$

Dabei gilt für:

$S(\lambda) =$      Strahlungsverteilung der Lichtart
$R(\lambda) =$      Reflexionskurve der Probe

Um aus den Messwerten die Farbmaßzahlen ermitteln zu können, muss bei jeder Wellenlänge der drei Primärfarben die Farbe nachgestellt werden. Die Formel für die Berechnung der Farbmaßzahlen lautet:

$$X = \sum_{\lambda} S(\lambda) * R(\lambda) * \bar{x}(\lambda)$$

$$Y = \sum_{\lambda} S(\lambda) * R(\lambda) * \bar{y}(\lambda)$$

$$Z = \sum_{\lambda} S(\lambda) * R(\lambda) * \bar{z}(\lambda)$$

Dabei sind die Gleichungen $S(\lambda)$, $\bar{x}(\lambda)$, $\bar{y}(\lambda)$ und $\bar{z}(\lambda)$ für jede Lichtart und Beobachter (2°, 10°) genormt. $S(\lambda)*\bar{x}(\lambda)$, $S(\lambda)*\bar{y}(\lambda)$, $S(\lambda)*\bar{z}(\lambda)$ werden bei jeder Schrittweite gesammelt. $R(\lambda)$ ist bei der durchzuführenden Messung Variable.

Von besonderer Bedeutung hierbei ist die Farbmaßzahl Y. Y wird bei den Spektralwertkurven an das Heiligkeitsempfinden des Auges angepasst, sie gibt die Helligkeit der Probe an. Idealerweise werden die Werte derart normiert, dass der Y - Wert bei einer ideal weißen Probe den Wert 100 besitzt.

Um die Farbe eindeutig klassifizieren zu können, muss neben der von den Beobachtern mit einem Gesichtsfeld von 2° oder 10° ermittelten Farbmaßzahlen noch die Lichtart angegeben werden, mit der die Beobachtung erfolgt. Die Angabe der Farbmaßzahl erfolgt folglich

1. X D65/2
bzw.
2. $X_2$D65

Hierbei ist X die Farbmaßzahl und D65 die Lichtart.

2 bedeutet 2° - Beobachter

Die Darstellung der Farbe erfolgt zur Darstellung der technischen Gegebenheiten in einem dreidimensionalen Raum erfolgt, in einer graphischen Darstellung. Um die graphische Darstellung zu ermöglichen, wird der dreidimensionale Raum in einer Helligkeitsstufe geschnitten und diese Schnittebene als Normfarbtafel verwendet. Dabei sind die Koordinaten dieser Farbtafel die Anteile der Farbmaßzahlen (Normfarbwertanteile). Die Normfarbwertanteile werden berechnet:

$$x = \frac{X}{X+Y+Z}$$

$$y = \frac{Y}{X+Y+Z}$$

Hierbei werden nur zwei der drei Normfarbwertanteile benötigt, um eine Farbe genau zu beschreiben, da die Summe der Normfarbwertanteile eins ist.

Es gilt:

$$x + y + z = 1$$

Hierbei werden normalerweise die Koordinaten x und y benutzt, auf die dritte Koordinate wird zumeist verzichtet, sie steht senkrecht auf dem Koordinatensystem und gibt die Helligkeit an.

Zur Berechnung des Farbabstandes zweier Farben muss jeder einzelne Ort der Farbe im Farbraum festgesetzt sein. Ausgehend hiervon kann dann der Abstand zweier Farbpunkte im Koordinatensystem berechnet werden.

Bei der Berechnung des Farbabstandes wird, ausgehend von einer Standardprobe, die Berechnung durchgeführt. Das Ergebnis der Berechnung und Versuche hierzu haben ergeben, dass bei manchen Farborten ein Abstand von einer definierten Größe zu berechnen ist, von einem Beobachter jedoch kein Unterscheid in der Farbe festgestellt werden kann. Es wurde folglich festgestellt, dass nicht an jedem Ort eines Farbraumes der sichtbare Unterschied dem eines Farbabstandes einer Einheit entspricht. Daher werden die Farbabstände bzw. der Farbeindruck als Ellipsoide dargestellt und übernommen. Zur Umgehung dieses Problems wurde der sogenannte CIELAB-Farbenraum entwickelt.

Die Farbkoordinaten des Farbenraumes können durch die folgende Gleichung umgerechnet werden:

$$L^* = 116\ Y^* - 16$$

$$a^* = 500\ (X^* - Y^*)$$

$$b^* = 200\ (Y^* - Z^*)$$

Dabei gilt:

$$X^* = \sqrt[3]{X/X_n}\ \text{für } X/X_n > 0{,}008856$$

$$X^* = 7{,}787 * \left(X/X_n\right) + 0{,}138\ \text{für } X/X_n \leq 0{,}008856$$

$$Y^* = \sqrt[3]{Y/Y_n}\ \text{für } Y/Y_n > 0{,}008856$$

$$Y^* = 7{,}787 * \left( \frac{Y}{Y_n} \right) + 0{,}138 \text{ für } \frac{Y}{Y_n} \leq 0{,}008856$$

$$Z^* = 3\sqrt{\frac{Z}{Z_n}} \text{ für } \frac{Z}{Z_n} > 0{,}008856$$

$$Z^* = 7{,}787 * \left( \frac{Z}{Z_n} \right) + 0{,}138 \text{ für } \frac{Z}{Z_n} \leq 0{,}008856$$

$X_n$, $Y_n$, $Z_n$ entsprechen den Normfarbwerten. [10]

Im CIELAB-Raum wird der Farbabstand über zwei Formeln berechnet, die insbesondere in der Industrie Anwendung gefunden haben.
Diese Formeln lauten wie folgt:

1. Diese Formel bei Vektorrechnung:

$$\Delta E^* = \sqrt{(\Delta L^*)^2 + (\Delta a^*)^2 + (\Delta b^*)^2}$$

oder

2. Diese Formel gilt bei zylindrisch aufgetragenen Koordinaten

$$\Delta E^* = \sqrt{(\Delta L^*)^2 + (\Delta C^*)^2 + (\Delta H^*)^2}$$

L* ist hier die Helligkeit, C* die Buntheit oder Sättigung, H* der Bunttonwinkel oder Farbton.

Wie bereits festgestellt, können zwei Farbproben, welche die gleichen Farbmaßzahlen besitzen, unter einer Lichtart einen identischen Farbeindruck hinterlassen, unter einer anderen Lichtart einen Farbeindruck erzeugen. Dieser Effekt wird als sogenannte Metamerie bezeichnet und ist hauptsächlich von der Lichtart, das heißt von deren spektraler Verteilung und dem Reflexionsverhalten der Probe, abhängig.

Bei der Farbrezeptierung muss vor allem der Zusammenhang zwischen Reflexion, Farbmittelkonzentration und Farbstärke betrachtet werden.

Der Zusammenhang der Reflexion und der Streuung in Abhängigkeit von der Farbmittelkonzentration ist zu klären, da die Farbmessung auch für die Farbrezeptierung einzusetzen ist. Im Weiteren wird bei der Darstellung lediglich auf opake Systeme Bezug genommen, da derartige in der Industrie insbesondere Einzug gefunden haben.

Der Reflexionsgrad lässt sich wie folgt berechnen:

$$R = 1 + \frac{K}{S} - \sqrt{\left(1 + \frac{K}{S}\right)^2 - 1}$$

Hierbei ist K die Absorption, S die Streuung und R der Reflexionsgrad.

Im Weiteren muss die Farbstärke ermittelt werden. Die Farbstärke gibt das Verhältnis einer Probe zu einem Standard an, der als 100 % Farbstärke festgelegt ist.

$$F = \frac{K_{PF}}{K_{SF}}$$

$K_{PF}$ ist die Absorption der Probe und $K_{SF}$ ist die Absorption des Standards.

Aus diesem Verhältnis ist die Konzentration des Farbmittels berechenbar, die benötigt wird, um eine Probe mit dieser Farbstärke herzustellen. Die Abhängigkeit ist reziprok.

Alleinig aus der Farbstärke kann jedoch eine Rezeptierung nicht durchgeführt werden. Für die Nachstellung der Farbprobe muss das Verhalten der Pigmente bei unterschiedlichen Konzentrationen bestimmt werden, da aus der Messung nur die Normfarbwerte und die Reflexionskurve vorliegt. Aus der Gleichung

$$R = 1 + K/S - \sqrt{\left(1 + K/S\right)^2 - 1}$$

ist der Zusammenhang zwischen Reflexion, der Absorption und Streuung bei einer Wellenlänge ersichtlich.

Für die Mischung von verschiedenen Pigmenten gilt daher der Zusammenhang für die Absorption und die Streuung:

$$K = K_M + K_1 * c_1 + K_2 * c_2$$

$$S = S_M + S_1 * c_1 + S_2 * c_2$$

oder allgemein:

$$K = K_M + \Sigma K_i * c_i$$

$$S = S_M + \Sigma S_i * c_i$$

Anhand dieses Zusammenhanges kann die Mischung von Pigmenten bei einer Wellenlänge bestimmt werden. Das Ziel ist hierbei, den Reflexionsgrad der Probe zu erreichen.

Da die Reflexionskurve jeweils nur für eine Wellenlänge Gültigkeit hat, wird die Reflexionskurve anhand verschiedener Wellenlängen errechnet. Hierbei muss gegeben sein, dass der Farbabstand bei den einzelnen Wellenlängen innerhalb einer vorgegebenen Toleranz liegt. Dies ist bei der Rezeptur dann zu berücksichtigen.

Im nachfolgenden wird anhand eines schematischen Ablaufschemas die Rezepturermittlung verdeutlicht.

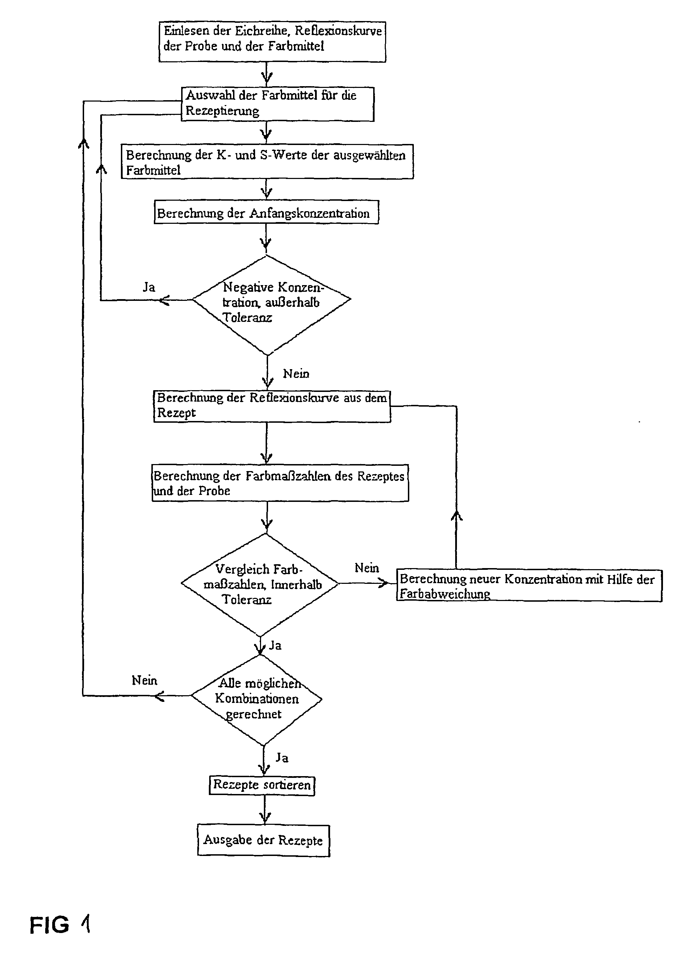

Dieses Schema ist in der beigefügten Figur FIG aufgezeigt.

Das Schema arbeitet wie folgt:

Einlesen der Eichreihe, Ermittlung der Reflexionskurve der Probe und der Farbmittel. Anschließend erfolgt eine Auswahl der Farbmittel für die Rezeptierung. Es werden die K- und S-Werte der ausgewählten Farbmittel errechnet. Anschließend wird die Anfangskonzentration berechnet. Ergibt sich hierbei eine negative Konzentration, so muss erneut zur Auswahl der Farbmittel für die Rezeptierung zurückgegangen werden. Ergibt sich keine negative Konzentration bzw. liegt der Wert nicht außerhalb der Toleranz, werden die Reflexionskurven aus dem Rezept berechnet. Anschließend erfolgt die Umrechnung der Farbmaßzahlen des Rezeptes und der Probe. Es erfolgt anschließend ein Vergleich der Farbmaßzahlen, ob diese innerhalb der Toleranz liegen. Trifft dies zu, werden alle möglichen Kombinationen errechnet.

Ist dies nicht möglich, muss erneut zurück zur Auswahl der Farbmittel gegangen werden. Liegen die Farbmaßzahlen außerhalb der Toleranz bzw. ist der Farbvergleich nicht zutreffend, wird eine neue Berechnung der Konzentration mit Hilfe der Farbabweichung ermittelt. Es wird zurückgegangen zum Schritt zur Berechnung der Reflexionskurve aus dem Rezept. Sind alle möglichen Kombinationen errechnet, so erfolgt eine Sortierung der Rezepte, anschließend erfolgte eine Ausgabe der Rezepte.

Eine weitere Vorgehensweise und eine Verfahrensart ist dadurch gegeben, dass durch gezielte Farbrezeptierung mit eingefärbten Recyclingmaterial die bisher zu verwendende Masterbatch-Menge zur Einfärbung der Neuware durch farbiges Mahlgut ersetzt wird. Es muss hierbei das Recyclingmaterial zurückgerechnet werden, auf eine Mischung aus den Farbmitteln und deren Konzentration im uneingefärbten Kunststoff.

Dieses Rückrechnen ist notwendig, da wie bisher aufgezeigt, nur anhand der Farbmittel und deren Koeffizienten eine Rezeptierung erfolgen kann.

Zugleich wird auch das Problem umgangen, dass das Recyclingmaterial von einer externen Firma angeliefert wird, und somit nicht gewährleistet ist, dass die Farbmittel mit den Farbmitteln identisch sind, wie bei der Erstellung von vorgegebenen Eichreihen verwendet wurden. Die Masterbatches, die ein und die selbe Farbe erzeugen sollen, können von Farbhersteller zu Farbhersteller unterschiedlich sein und daher auch unterschiedliche Absorptions- und Streukoeffizienten besitzen. Dies hätte dann zur Folge, dass für jede Farbe eines Herstellers eigene Berechnungen durchzuführen wären.

Sollte dies vermieden werden, müsste für jedes Material und jedes gefertigte Teil vom Hersteller bis zur Recyclingfirma verfolgbar sein, welche Materialien integriert sind. Es müsste exakt Buch geführt werden, welches Material mit welchem Farbstoff in welcher Menge vorhanden ist. Diese Information müsste den Abnehmern dann bereitgestellt werden. Dies wäre ein sehr aufwendiger logistischer Aufwand. Durch die Rückrechnung wird dieses Problem umgangen. Es müssen nicht mehr einzelne Farben voneinander getrennt werden, es muss nur noch ein definierter Kunststofftyp geliefert werden.

Es muss jedoch die Mischung der zerkleinerten Teile homogen sein, damit eine konstante Mischfarbe vorhanden ist. Andernfalls würde es zu Farbunterschieden kommen. Für jedes Farb-Masterbatch muss eine sogenannte Kalibrierreihe erstellt werden. Durch solch eine Kalibrierreihe können zwei Koeffizienten, beispielsweise Absorptions- und Streukoeffizient, bestimmt werden, die für die Rezeptberechnung notwendig sind, sowie die Deckkraft des Farbbatches bestimmen. Das vorhandene Mahlgut wird extrudiert. Durch das Extrudieren entstandene Granulat ist für eine direkte Farbmessung nicht einsetzbar, da zu diesem Zweck eine ebene Oberfläche erforderlich ist. Hierzu werden sogenannte Testplatten in einem hierzu speziell angefertigten Werkzeug hergestellt.

Die Testplatten, sowie das hierfür notwendige Werkzeug sind von der Anmelderin unter dem Aktenzeichen DE 197 39 599 C2 patentrechtlich geschützt.

Das Werkzeug besitzt eine quaderförmige Kavität, von deren beiden größten rechteckigen Oberflächen eine dreifach strukturiert ist. Ein sechstel der Oberfläche ist hochglanzpoliert, zwei Drittel glatt und ein sechstel hat eine genarbte Oberfläche

Im Weiteren wird, zur Verdeutlichung der Erfindung, die erfindungsgemäße Lehre anhand eines konkreten Ausführungsbeispieles erläutert. Es soll ein Kunststoffteil mit einer definierten Farbe aus einem technischen oder thermoplastischen Kunststoff hergestellt werden. Als derartiger Kunststoff kommt etwa ABS in Frage: Hierzu wird Altkunststoff verwendet. Der Altkunststoff ist nach Farbe und Kunststoffart sortiert. Diese Kunststoffteile sind farbrein sortiert und liegen relativ farbrein vor.

In einer besonders vorteilhaften Ausgestaltung der Erfindung werden die Kunststoffe nicht nach Farben sortiert, sondern in Mischform zu einer dann entstehenden Mischfarbe gesammelt. Die Kunststoffteile werden unsortiert homogenisiert, und anschließend, wie die farbsortierten Kunststoffe wiederverwendet, wie im weiteren beschrieben. Die Kunststoffteile sind Altteile, welche aus diversen Geräteeinheiten oder sonstigen Bestandteilen herausgebaut sind und lediglich nur noch aus dem definierten Kunststoff bestehen. Diese Teile werden nach Farbklassen sortiert und in Behältern abgelegt. Der Inhalt dieser Behälter wird anschließend gemahlen und in gemahlenem Zustand gelagert. Das Kunststoffmahlgut ist dann farbreiner Kunststoff, soweit dies die Vorsortierung ermöglicht. Für jedes dieser vorliegenden Kunststoffmahlgute werden die Farbpigmente, gesondert für jeden sortierten und gemahlenen Kunststoff ermittelt. Es liegt, nach dem Mahlen der Kunststoffe, ein Kunststoffmahlgut, farbrein für jeden Farbstoff, vor. Durch die Ermittlung der Farbpigmente wird dem Kunststoffmahlgut eine Farbpigmentpalette zugewiesen.

Die Zielfarbe des Zielkunststoffes ist bekannt. Es ist ebenfalls bekannt, welche Farbpigmente notwendig sind, um die Zielfarbe zu erreichen.

Auf Basis der Zielfarbe und der notwendigen Farbpigmente wird ein erster Rezepturvorschlag für die Zusammenstellung der Farbpigmente, welche zur Herstellung des Zielkunststoffes notwendig sind, ermittelt. Im Weiteren werden weitere Rezepturvorschläge ermittelt.

Aus den einzelnen vorliegenden Rezepturvorschlägen wird anhand der zugehörigen Remissionskurve, insbesondere anhand der Metamerie , d.h. Farbunterschiede bei rechnerischer Gleichheit, ein Rezepturvorschlag ausgewählt.

Anhand des ausgewählten Rezepturvorschlages werden die zur Herstellung des Kunststoffes notwendigen Farbpigmente ermittelt. Die einzelnen ermittelten Farbpigmente werden anschließend den jeweils bereits vorhandenen gemahlenen Kunststoffmahlgütern zugeordnet. Anschließend wird die Menge und Zusammensetzung des neu zu bildenden Kunststoffes auf Basis der vorhandenen gemahlenen Kunststoffmahlgüter anhand der zugeordneten Farbpigmente ermittelt. Es wird anschließend die prozentuale Menge der jeweils zu verwendenden einzelnen vorliegenden Granulatmengen berechnet und ermittelt.

Auf Basis dieser errechneten prozentualen Zusatzmengen werden die einzelnen vorliegenden gemahlenen Kunststoffkomponenten gemäß der ermittelten Rezeptur unter zu Hilfenahme einer Kunststoffcompoundieranlage zusammengemischt. Hierbei entsteht der Kunststoff, welcher später verwendet werden soll, mit der gewünschten Farbe. In der Kunststoffcompoundieranlage werden die einzelnen Altkunststoffe, gravimetrisch dosiert plastifiziert, homogenisiert und regranuliert. Der hierbei entstehende Kunststoff kann weiterverarbeitet werden.

Um den einzelnen vorliegenden Kunststoffmahlgütem die entsprechenden Farbpigmente zuzuweisen, wird von jedem Kunststoffgranulat eine homogenisierte Masse hergestellt und über eine Spritzgussmaschine ein Testformteil abgespritzt. Bei diesem Testformteil handelt es sich vorzugsweise um die unter dem Aktenzeichen DE 197 39 599 C2 geschützte Testplatte.

Auf Basis dieser Testplatte lassen sich die einzelnen Farbpigmente des Kunststoffes zuweisen, d.h. es kann auf die Farbpigmente, welche im Kunststoffmahlgut vorhanden sind, zurückgerechnet werden.

Wird bei der Erstellung des Rezepturvorschlages festgestellt, dass mit den vorliegenden Kunststoffgranulaten die gewünschte Zielfarbe nicht erreicht werden kann, da entweder eine entsprechende Farbe fehlt oder aber eine nichtausreichende Menge eines Mahlgutes vorhanden ist, so kann durch Zugabe von Farbbatches die Zielfarbe erreicht werden. Dies ist jedoch lediglich ein Mengenproblem, da die technische Realisierung stets gegeben ist.

## Patentansprüche

1. Verfahren zur Einfärbung von Kunststoffen unter Verwendung von Kunststoffrecyclingmaterial, wobei gebrauchte Kunststoffe gesammelt werden, die gesammelten Kunststoffe nach Farbe sortiert werden, die gesammelten und sortierten Kunststoffe gemahlen und gelagert bzw. zwischengelagert werden, die Farbpigmente, welche in den gemahlenen und gelagerten bzw. zwischengelagerten Kunststoffen vorhanden sind, ermittelt werden, die Zielfarbe des neu herzustellenden Kunststoffes vorgegeben wird und die gebrauchten gemahlenen Kunststoffe nach Mengen derart vermischt werden, dass der neue Kunststoff mit der gewünschten Zielfarbe vorliegt.

2. Verfahren nach Anspruch 1,
   **dadurch gekennzeichnet, dass**
   die gebrauchten Kunststoffen nach Farbe sortiert werden und den gemahlenen Kunststoffen Werte von Farbpigmenten zugeordnet werden.

3. Verfahren nach einem der Ansprüche 1 oder 2,
   **dadurch gekennzeichnet, dass**
   die Farbe des zu erzielende Kunststoffes nach LAB-Werten definiert wird.

4. Verfahren nach einem der vorhergehenden Ansprüche
   **dadurch gekennzeichnet, dass**
   ein Rezepturvorschlag zur Zusammenstellung der Farbpigmente, welche zur Herstellung des Zielkunststoffes notwendig sind, ermittelt wird.

5. Verfahren nach einem der vorhergehenden Ansprüche
   **dadurch gekennzeichnet, dass**
   der Rezepturvorschlag anhand der zugehörigen Remissionskurve ausgewählt wird und/oder die Menge und die Zusammensetzung des neu zu bildenden Kunststoffes auf Basis der vorhandenen gemahlenen Altkunststoffe anhand der zugeordneten Farbpigmente erfolgt und/oder die prozentualen Mengen der jeweils zu verwendenden einzelnen vorliegenden Granulatmengen ermittelt wird.

6. Verfahren nach Anspruch 5,
   **dadurch gekennzeichnet, dass**
   die einzelnen ermittelten Mengen der Komponenten gemäß dem Rezepturvorschlag unter Zuhilfenahme einer Kunststoffcompoundieranlage zusammengemischt werden.

7. Verfahren nach Anspruch 5 oder 6,
   **dadurch gekennzeichnet, dass**
   das Kunststoffmahlgutgemisch unter zu Hilfenahme einer gravimetrischen Dosieranlage dosiert wird.

8. Verfahren nach einem der Ansprüche 5 bis 7,
   **dadurch gekennzeichnet, dass**
   das Kunststoffmahlgut plastifiziert, homogenisiert und regranuliert wird.

9. Verfahren nach einem der vorangehenden Ansprüche,
   **dadurch gekennzeichnet, dass**
   aus dem Kunststoffmahlgutgemisch eine Testform hergestellt wird.

**10.** Verfahren nach Anspruch 9,
**dadurch gekennzeichnet, dass**
die Testform eine Testplatte ist.

**11.** Verfahren nach einem der vorangehenden Ansprüche,
**dadurch gekennzeichnet, dass**
Kalibrierreihen erstellt werden und durch diese Kalibrierreihen Koeffizienten der Kunststoffmahlgute ermittelt werden und/oder Absorptions- und Streukoeffizienten ermittelt werden können.

**12.** Verfahren nach einem der vorangehenden Ansprüche,
**dadurch gekennzeichnet, dass**
die Festlegung der Farbe des Kunststoffmahlgutes über die Festlegung einer Farbmaßzahl erfolgt und die Farbmaßzahl durch die Formel

$$M = \sum_{\lambda} S(\lambda) * R(\lambda)$$

ermittelt wird, wobei S($\lambda$) die Strahlungsverteilung der Lichtart und R($\lambda$) die Reflexionskurve der Probe ist.

**13.** Verfahren nach einem der vorangehenden Ansprüche,
**dadurch gekennzeichnet, dass**
die Reflexionskurve des Kunststoffmahlgutes anhand einer Probe des Kunststoffmahlgutes, aus welcher die Testplatte hergestellt wird, ermittelt wird.

**14.** Verfahren nach einem der vorangehenden Ansprüche,
**dadurch gekennzeichnet, dass**
bei jeder Wellenlänge der drei Primärfarben die Farbe nachgestellt wird und die Farbmaßzahl für jede Primärfarbe ermittelt wird, wobei die Farbmaßzahlen wie folgt berechnet werden:

$$X = \sum_{\lambda} S(\lambda) * R(\lambda) * \bar{x}(\lambda)$$

$$Y = \sum_{\lambda} S(\lambda) * R(\lambda) * \bar{y}(\lambda)$$

$$Z = \sum_{\lambda} S(\lambda) * R(\lambda) * \bar{z}(\lambda)$$

wobei S($\lambda$), $\bar{x}(\lambda)$, $\bar{y}(\lambda)$ und $\bar{z}(\lambda)$ für jede Lichtart und Beobachter (2°, 10°) genormt sind und S($\lambda$)\*$\bar{x}(\lambda)$, S($\lambda$)\*$\bar{y}(\lambda)$, S($\lambda$)\*$\bar{z}(\lambda)$ bei jeder Schrittweite ermittelt werden und R($\lambda$) variabel ist.

**15.** Verfahren nach einem der vorangehenden Ansprüche,
**dadurch gekennzeichnet, dass**
die Werte für die Farbmaßzahl derart normiert werden, dass die Farbmaßzahl für den Wert von Y bei einer weißen Probe den Wert 100 besitzt.

**16.** Verfahren nach einem der vorangehenden Ansprüche,
**dadurch gekennzeichnet, dass**

der Reflexionsgrad der Probe ermittelt wird, der sich wie folgt berechnet:

$$R = 1 + K/S - \sqrt{\left(1 + K/S\right)^2 - 1}$$

wobei K die Absorption, S die Streuung und R der Reflexionsgrad ist.

**17.** Verfahren nach einem der vorangehenden Ansprüche,
**dadurch gekennzeichnet, dass**
die Farbstärke der Probe ermittelt wird, wobei Farbstärke im Verhältnis zu einem Standardwert festgelegt wird, welcher als 100 % Farbstärke festgelegt ist und/oder der Reflexionsgrad der Probe ermittelt wird und/oder der Reflexionsgrad der Probe für unterschiedlichen Wellenlängen einfallenden Lichtes ermittelt wird.

**Claims**

**1.** Method for colouring plastics by using plastic recycling material, wherein used plastics are collected, the collected plastics are sorted according to colour, the collected and sorted plastics are ground and stored or temporarily stored, the colour pigments which are present in the ground and stored or temporarily stored plastics are determined, the target colour of the plastic to be newly produced is specified, and the ground used plastics are mixed according to quantities such as to provide the new plastic having the intended target colour.

**2.** Method according to Claim 1, **characterised in that** the used plastics are sorted according to colour and the ground plastics are allocated values of colour pigments.

**3.** Method according to Claim 1 or 2, **characterised in that** the colour of the plastic to be obtained is defined according to LAB values.

**4.** Method according to one of the preceding claims, **characterised in that** a proposed formulation for the composition of the colour pigments which are needed in order to produce the target plastic is determined.

**5.** Method according to one of the preceding claims, **characterised in that** the proposed formulation is selected with the aid of the associated re-emission curve, and/or the amount and composition of the plastic to be newly formed are based on the available ground old plastics with reference to the allocated colour pigments, and/or the percentage amounts of the individual available granule quantities respectively to be used are determined.

**6.** Method according to Claim 5, **characterised in that** the individual determined amounts of the components are mixed together according to the proposed formulation with the aid of a plastic compounding system.

**7.** Method according to Claim 5 or 6, **characterised in that** the mixture of ground plastics is assayed with the aid of a gravimetric assaying system.

**8.** Method according to one of Claims 5 to 7, **characterised in that** the ground plastic material is plasticized, homogenised and re-granulated.

**9.** Method according to one of the preceding claims, **characterised in that** a test shape is made from the mixture of ground plastics.

**10.** Method according to Claim 9, **characterised in that** the test shape is a test plate.

**11.** Method according to one of the preceding claims, **characterised in that** series of calibrations are compiled, and coefficients of the ground plastics can be determined and/or absorption and scattering coefficients can be determined using these series of calibrations.

**12.** Method according to one of the preceding claims, **characterised in that** the colour of the ground plastic is established by establishing a colour parameter, and the colour parameter is determined by the formula

$$M = \sum_{\lambda} S(\lambda) * R(\lambda)$$

where S(λ) is the radiation distribution of the light type and R(A) is the reflection curve of the sample.

13. Method according to one of the preceding claims, **characterised in that** the reflection curve of the ground plastic is determined with the aid of a sample of the ground plastic, from which the test plate is made.

14. Method according to one of the preceding claims, **characterised in that** the colour is adjusted for each wavelength of the three primary colours, and the colour parameter is determined for each primary colour, the colour parameters being calculated as follows:

$$X = \sum_{\lambda} S(\lambda) * R(\lambda) * \overline{x}(\lambda)$$

$$Y = \sum_{\lambda} S(\lambda) * R(\lambda) * \overline{y}(\lambda)$$

$$Z = \sum_{\lambda} S(\lambda) * R(\lambda) * \overline{z}(\lambda)$$

where $S(\lambda)$, $\bar{x}(\lambda)$, $\bar{y}(\lambda)$ and $\bar{z}(\lambda)$ are normalised for each light type and observer (2°, 10°), and $S(\lambda)*\bar{x}(\lambda)$, $S(\lambda)*\bar{y}(\lambda)$ and $S(\lambda)*\bar{z}(\lambda)$ are determined for each increment, and R(λ) is variable.

15. Method according to one of the preceding claims, **characterised in that** the values of the colour parameter are normalised so that the colour parameter has the value 100 for the value of Y in the case of a white sample.

16. Method according to one of the preceding claims, **characterised in that** the reflectivity of the sample is determined, and is calculated as follows:

$$R = 1 + \frac{K}{S} - \sqrt{\left(1 + \frac{K}{S}\right)^3 - 1}$$

where K is the absorption, S is the scattering and R is the reflectivity.

17. Method according to one of the preceding claims, **characterised in that** the colouring strength of the sample is determined, colouring strength being established in relation to a standard value which is set as a colouring strength of 100%, and/or the reflectivity of the sample is determined, and/or the reflectivity of the sample is determined for different wavelengths of incident light.

**Revendications**

1. Procédé pour la coloration de matières synthétiques par utilisation de matériau synthétique recyclé, où des matières synthétiques usagées sont collectées, les matières synthétiques collectées sont triées par couleurs, les matières synthétiques collectées et triées sont broyées et entreposées ou stockées provisoirement, les pigments colorants présents dans les matières synthétiques broyées, entreposées ou stockées provisoirement, sont déterminés, la couleur cible pour la nouvelle matière synthétique à fabriquer est prescrite et les matières synthétiques usagées et broyées sont mélangées en teneurs telles que la nouvelle matière synthétique est présentée avec la couleur cible souhaitée.

**2.** Procédé selon la revendication 1,
     **caractérisé en ce que**
     les matières synthétiques usagées sont triées par couleurs et **en ce que** des valeurs de pigments colorants sont attribuées aux matières synthétiques broyées.

**3.** Procédé selon la revendication 1 ou 2,
     **caractérisé en ce que**
     la couleur de la matière synthétique à obtenir est définie suivant des valeurs Lab.

**4.** Procédé selon l'une des revendications précédentes,
     **caractérisé en ce que**
     est déterminée une proposition de formulation pour la composition des pigments colorants nécessités pour la fabrication de la matière synthétique cible.

**5.** Procédé selon l'une des revendications précédentes,
     **caractérisé en ce que**
     la proposition de formulation est sélectionnée sur la base de la courbe de luminance correspondante et/ou la quantité et la composition de la nouvelle matière synthétique à produire à partir des matières synthétiques usagées broyées existantes sont déterminées sur la base des pigments colorants attribués et/ou les pourcentages des différentes quantités présentes de granulés à utiliser sont déterminés.

**6.** Procédé selon la revendication 5,
     **caractérisé en ce que**
     les différentes quantités de composants déterminées sont mélangées ensemble suivant la proposition de formulation en recourant à une installation de compoundage de matières synthétiques.

**7.** Procédé selon la revendication 5 ou 6,
     **caractérisé en ce que**
     le mélange de matière synthétique broyée est dosé en recourant à une installation de dosage gravimétrique.

**8.** Procédé selon l'une des revendications 5 à 7,
     **caractérisé en ce que**
     la matière synthétique broyée est plastifiée, homogénéisée et regranulée.

**9.** Procédé selon l'une des revendications précédentes,
     **caractérisé en ce que**
     une pièce moulée d'essai est fabriquée à partir du mélange de matière synthétique broyée.

**10.** Procédé selon la revendication 9,
     **caractérisé en ce que**
     la pièce moulée d'essai est une plaque d'essai.

**11.** Procédé selon l'une des revendications précédentes,
     **caractérisé en ce que**
     des séries de calibrage sont réalisées et qu'au moyen de ces séries de calibrage, les coefficients des matières synthétiques broyées sont déterminés et/ou les coefficient d'absorption et de diffusion sont déterminés.

**12.** Procédé selon l'une des revendications précédentes,
     **caractérisé en ce que**
     la couleur de la matière synthétique broyée est définie par définition d'une mesure colorimétrique, et **en ce que** la mesure colorimétrique est déterminée au moyen de la formule

$$M = \sum_{\lambda} S(\lambda) * R(\lambda)$$

où $S(\lambda)$ est la répartition de rayonnement de l'illuminant et $R(\lambda)$ la courbe de réflexion de l'échantillon.

**13.** Procédé selon l'une des revendications précédentes,
**caractérisé en ce que**
la courbe de réflexion de la matière synthétique broyée est déterminée sur la base d'un échantillon de la matière synthétique broyée à partir duquel la plaque d'essai est fabriquée.

**14.** Procédé selon l'une des revendications précédentes,
**caractérisé en ce que**
la couleur est corrigée pour chaque longueur d'onde des trois couleurs primaires et la mesure colorimétrique déterminée pour chaque couleur primaire, les mesures colorimétriques étant calculées comme suit :

$$X = \sum_{\lambda} S(\lambda) * R(\lambda) * \bar{x}(\lambda)$$

$$Y = \sum_{\lambda} S(\lambda) * R(\lambda) * \bar{y}(\lambda)$$

$$Z = \sum_{\lambda} S(\lambda) * R(\lambda) * \bar{z}(\lambda)$$

où $S(\lambda)$, $\bar{x}(\lambda)$, $\bar{y}(\lambda)$ et $\bar{z}(\lambda)$ sont normalisés pour chaque illuminant et observateur (2°, 10°), $S(\lambda)*\bar{x}(\lambda)$, $S(\lambda)*\bar{y}(\lambda)$, $S(\lambda)*\bar{z}(\lambda)$ déterminés pour chaque pas, et $R(\lambda)$ variable.

**15.** Procédé selon l'une des revendications précédentes,
**caractérisé en ce que**
les valeurs pour la mesure colorimétrique sont normalisées de telle manière que la mesure colorimétrique pour la valeur Y est de 100 pour un échantillon de couleur blanche.

**16.** Procédé selon l'une des revendications précédentes,
**caractérisé en ce que**
le facteur de réflexion de l'échantillon est déterminé, au moyen du calcul suivant :

$$R = 1 + K/S - \sqrt{(1+K/S)^2 - 1}$$

où K est l'absorption, S la diffusion et R le facteur de réflexion.

**17.** Procédé selon l'une des revendications précédentes,
**caractérisé en ce que**
l'intensité colorimétrique de l'échantillon est déterminée, celle-ci étant définie en relation avec une valeur standard, fixée en tant qu'intensité colorimétrique de 100 % et/ou le facteur de réflexion de l'échantillon est déterminé pour différentes longueurs d'onde de la lumière incidente.

```
┌─────────────────────────────────┐
│ Einlesen der Eichreihe, Reflexionskurve │
│ der Probe und der Farbmittel    │
└─────────────────────────────────┘
              │
              ▼
┌─────────────────────────────────┐
│ Auswahl der Farbmittel für die  │
│ Rezeptierung                    │
└─────────────────────────────────┘
              │
              ▼
┌─────────────────────────────────┐
│ Berechnung der K- und S-Werte der ausgewählten │
│ Farbmittel                      │
└─────────────────────────────────┘
              │
              ▼
┌─────────────────────────────────┐
│ Berechnung der Anfangskonzentration │
└─────────────────────────────────┘
              │
              ▼
         ◇ Negative Konzen-
           tration, außerhalb    ──── Ja
           Toleranz ◇
              │
            Nein
              ▼
┌─────────────────────────────────┐
│ Berechnung der Reflexionskurve aus dem │
│ Rezept                          │
└─────────────────────────────────┘
              │
              ▼
┌─────────────────────────────────┐
│ Berechnung der Farbmaßzahlen des Rezeptes │
│ und der Probe                   │
└─────────────────────────────────┘
              │
              ▼
         ◇ Vergleich Farb-
           maßzahlen, Innerhalb   ── Nein ──┐
           Toleranz ◇                        │
              │                  ┌─────────────────────────────────┐
             Ja                  │ Berechnung neuer Konzentration mit Hilfe der │
              │                  │ Farbabweichung                  │
              ▼                  └─────────────────────────────────┘
         ◇ Alle möglichen
 Nein ──  Kombinationen
           gerechnet ◇
              │
             Ja
              ▼
      ┌──────────────────┐
      │ Rezepte sortieren │
      └──────────────────┘
              │
              ▼
      ┌──────────────────┐
      │ Ausgabe der Rezepte │
      └──────────────────┘
```

**FIG 1**